# EUROPEAN PATENT SPECIFICATION

(11) **EP 1 241 767 B1**
(45) Date of publication and mention of the grant of the patent: **08.07.2015**
(21) Application number: 01106596.8
(22) Date of filing: 15.03.2001
(51) Int. Cl.: H02J 7/00

(54) **Real time clock synchronisation for mobile devices with rechargeable battery using the charger**
Synchronisation einer Echtzeituhr von mobilen Geräten mit wiederaufladbarer Batterie während des Ladevorgangs
Synchronisation d'une horloge à temps réel pour les stations mobiles avec batterie rechargeable au cours de la charge

(43) Date of publication of application: 18.09.2002
(73) Proprietor: Sony Deutschland GmbH, 10785 Berlin (DE)
(72) Inventor: Lechner, Thomas, Digital Telecommunications Europe, 85609 Aschheim (DE)
(74) Representative: Körber, Martin Hans

(56) References cited:
- EP-A- 0 593 118
- US-A- 5 408 421
- US-A- 5 539 298
- US-A- 5 608 306

## Description

The present invention relates to a time synchronisation in a mobile device, such as a mobile terminal for a wireless communication system, in particular it relates to a time synchronisation utilising radioed time signals.

A real time clock is a standard feature of present day mobile devices, like e.g. a PDA (Personal Digital Assistant), a notebook computer, a video camcorder, a digital still camera, a digital audio recorder, a cellular mobile radiophone or the like for use in a wireless telecommunication system, e.g. the GSM or UMTS systems. Usually, the circuitry providing a real time information in a mobile device is pulsed by a crystal-controlled oscillator with about 32 kHz and supplied with power from a rechargeable battery of the mobile device.

Deviations from the nominal frequency are not unusual for such a quartz crystal, so that offsets from a nominal frequency have to be accepted normally. The frequency stability guaranteed for customary quartz crystals ranges typically between a few ppm and up to some 100 ppm. The frequency output of a crystal oscillator is in addition a function of the ambient temperature, and ageing processes will further result in a frequency change with time. From that it becomes clear, that a real time provision based on a crystal-controlled oscillator will normally show a deviation from the actual time. Over time those deviations sum up resulting in a considerable error of the provided time. If the battery is empty or removed from the mobile device, the mobile device gets lost of its time information completely.

Many applications provided by mobile devices operating in a wired or wireless communication system, like e.g. fax services or message transmission or the like require date time stamps for informing the recipient about the transmission time. Also for storing data and administrating stored data, a time recorder forms a necessary requirement. Having a time information indicated on the display of a mobile device is generally a convenient feature for every user. Providing a correct time information is therefore indispensable for mobile devices.

From consumer radio clocks and consumer radio watches a system is known operating according to the principle, that a time information modulated onto an RF-signal is received and used to synchronise, respectively set the time of the clock or watch. Although those systems could principally be integrated in mobile devices it is practically not feasible, because they require a separate antenna for lower frequencies than the operating frequency of the mobile device, or in other words, the space required for the receiver part of the system including the antenna is not available in modem miniaturised mobile devices.

The document US 5 408 421 A shows a portable battery back-up data cartridge for transferring data and a real time clock signal between different host computers. The cartridge comprises a capacitor or a battery for supplying a real time clock within the cartridge with energy so that the real time clock stays operational even when the cartridge is not connected to a host.

The document US 5 608 306 A shows a rechargeable battery pack with an identification circuit, a real time clock and an authentication capability. The battery pack comprises a real time clock which is operated by battery energy stored within the battery pack. The document further shows an application device, for example a cell phone, which is supplied with power by the battery pack. This device is supplied with a real time clock signal by the real time clock of the battery pack.

The object of the present invention is now to minimise a possible deviation of a real time clock of a mobile device in relation to the actual time.

This object is achieved by a mobile device, for a wireless communication system with a clock means, a chargeable battery and connecting means for connecting the battery to a charging device, comprising a receiving means for receiving a time signal from said charging device when said connecting means is in connection with the charging device, and an adjusting means for adjusting the clock means according to a time information derived from the time signal. The mobile device is a mobile terminal of a wireless telecommunication system.

The above object is further achieved by a charging device for charging a mobile device having connection means for connecting the charging device to the mobile device and charging means for charging a battery of the mobile device, comprising a receiving means for receiving a time signal transmitted by radio, a retrieving means for retrieving a time information from the received time signal transmitted by radio, and a control means for controlling the transmission of the time information to the mobile device when being in contact with the mobile device.

This allows the construction of light weight mobile devices by renouncing the incorporation of an extra receiver plus an extra antenna for tuning the mobile devices real time clock. It further allows a simple adaptation to different regional conditions, like e.g. regionally different standards for a time signal transmitted. The absolute deviation of the real time clock is kept very low, because a battery of a mobile device has to be recharged in regular intervals.

Further advantageous features are claimed in the respective subclaims.

Advantageously, the adjusting means in the mobile device is adapted to detect errors in the time information supplied from the charging device, preventing an incorrect adjustment of the real time clock, and further advantageously allowing a correction of the errors detected in the time information.

Selected functions of the charging device are advantageously controlled by a control means of the mobile device, allowing an easy modification of the control process by downloading modified control software with the capabilities provided by the mobile device.

The retrieving means of the charging device is advantageously adapted to detect errors in the time information extracted from the time signal, so that incorrect time information will not be forwarded to the mobile device, and further, when an error in the time information is detected, this error is advantageously corrected before the time information is transmitted to the mobile device.

Preferably the charging device comprises an antenna element for ensuring a good reception quality of a radioed time signal. Most preferably that antenna element is formed by one or more connecting lines and/or a power cord of the charging device and/or the power cord connected to an electricity supply thus minimising the number of extra and large components even for time signals disseminated in the long-wave range.

The connecting means of the mobile device and the charging device comprise advantageously one or more connecting elements exclusively reserved for transmitting time information and/or data between the two apparatus for minimising the influence of drop-ins by parasitic signals.

The time information and/or data can further advantageously be exchanged between the mobile device and the charging device by a high frequency signal superimposed to a charging voltage so that no additional connecting contacts or connecting lines will be necessary.

Advantageously, the mobile device according to the present invention is a mobile terminal of a GSM or the UMTS system. In this case, the mobile terminal is e.g. a personal digital assistant, a cellular mobile radiophone or the like for use and operation in the respective one or more wireless telecommunication systems. Further, the mobile device according to the present invention can be any mobile device which can be operated on the basis of rechargeable batteries, such as a notebook computer, a video camcorder, a digital still camera, a digital audio recorder and the like.

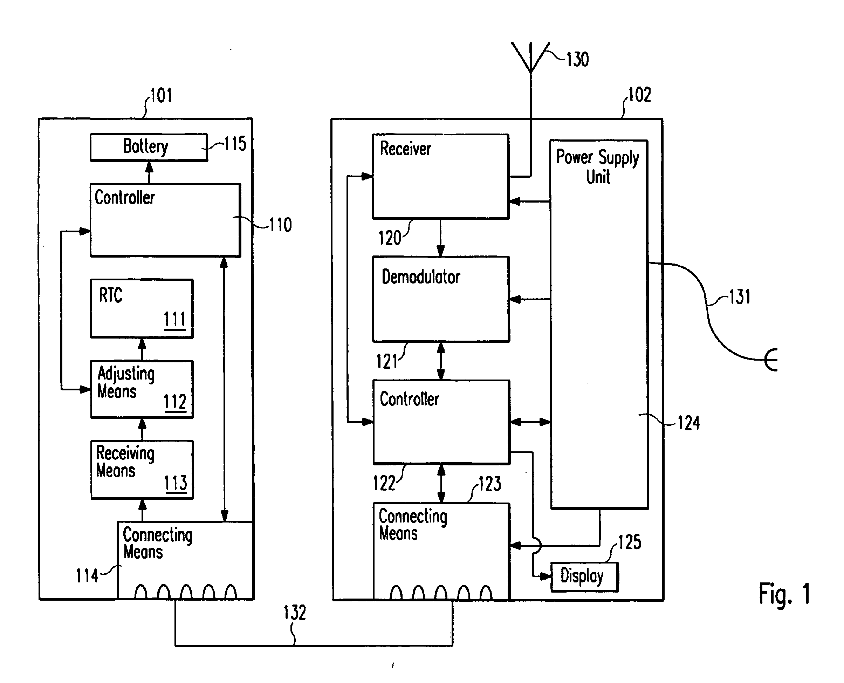

In the following description, the present invention is explained in more detail in relation to the enclosed drawings, in which
Figure 1 shows schematically a mobile device and a charging device according to the present invention.

In the drawings like elements are assigned identical reference numerals. It is to be under stood that in Fig. 1 only elements important for the understanding of the present invention are shown. Further elements necessary for the operation of a mobile device or for a charging device are omitted for the sake of clarity.

Fig. 1 shows a mobile device 101 according to the present invention, which is connected to a charging device 102 according to the present invention, whereby the line 132 connecting the mobile device with the charging device can be a cable or just represent a plug-in connection. Each of the two devices comprises a connecting means, which usually are complementary to each other. On the mobile device the connecting means provides contents for applying a charging current or voltage and/or contacts adapted for the transmission and reception of low current data signals. Usually, the connecting means of a mobile device is a receptacle of combined sockets for different plug. connectors. When the connecting line 132 is formed as a plug-in connection, the connecting means 123 of the charging device is built complementary to the connecting means 114 of the mobile device. Usually not all contents of the connecting means 114 of the mobile device are engaged when the mobile device is connected to the charging device, so that pins not necessary for the connection between the charging device 102 and the mobile device 101 can be discarded. Alternatively, the connection between the mobile device 101 and the charging device 102 can be realised as a wireless connection, where the charging power and optionally data are transmitted as wireless signals.

Main components of the charging device are a receiver 120 for receiving radio time signals, a retrieving means demodulator 121 for retrieving a time information from the received radio time signal, a controller 122 for controlling the functions of the charging device, a power supply unit 124, and a connecting means described above. Additionally the charging device may comprise a display 125 for displaying information about i.e. the currently active function, the state of charge of the battery in the mobile device or the current time or the like. The power supply unit transforms the mains voltage into the supply voltage for the charging of the mobile device's battery 115. The charging process itself can be controlled by an internal circuitry of the power supply unit but may also be controlled by the controller 122.

The receiver 120 is adapted to receive signals which are used for the dissemination of the unit of time. Those signals containing time information can e.g. be transmitted in the long wave as well as in the short wave range. In particular, a dissemination of the legal time in Germany is transmitted via a low frequency transmitter DCF-77. A time is based on the most accurate atomic clock yielding the international atomic time (TAI). The carrier frequency of 77.5 kHz is a standard frequency. The carrier's amplitude is modulated with second markers. A code contains the numbers of the minute, hour, day, day of the week, month and the last two digits of the number of the year. For 59 seconds no second marker is transmitted so that every new minute starts with the next second marker.

A different source for wirelessly obtaining time information is the radio data system (RDS) which is used by many radio broadcasting stations to transmit additional information to the FM program in form of digital data. RDS provides several functions, one of which is the function CT which is a synonym for current time. Usually the time information with the function CT is kept in compliance with the legal time. The RDS signal is supplied at 53 kHz at the base band of the broadcast signal and provides not only the actual time but also the date. Even though the RDS signal is supplied at a fixed frequency of the base band of a broadcast, the actual frequency depends on the frequency on which the broadcast containing the respective RDS signal is transmitted. In contrary to the DCF-77 signal, which can be received within a radius of about 2000 km around the area of Frankfurt in Germany, the range of broadcasting stations sending on FM is usually limited to about a few hundred kilometres. The receiver 120 therefore may comprise a tuning facility allowing to scan the frequency band in the short wave range for tuning to a suited broadcasting station.

The time information is embedded in a coded version in the time signal. A demodulator 121 is provided to decode the time information from the raw data embedded in the time signal. Before a time information is forwarded to the mobile device, it has to be verified. A signal broadcast every minute as e.g. the DCF-77 time signal contains some check bits so that the integrity of the received signal can be verified. The reasonableness of the retrieved time information can further be checked by comparing a new time information with a time information retrieved before. The time past since the reception of the last time information can for example be read out from a real time clock integrated in the charging device or by querying the actual radio of the real time clock of the mobile device. If the time information just received is not reliable, the actual time will be deduced from the last reliable time information in combination with the time elapsed in this reliable information has been received.

An alternative error handling includes two real time clocks which are operated in read only mode with continuity is used to decide if the changes made to the first real time clock on the basis of the time information retrieved from the radio time signal is plausible or not. This method is especially valuable, when a time signal is suddenly received from a different time zone. Further, mathematical or probability based methods can be employed to correct an error in that retrieved time information.

When the receive level of a time signal is high, the information embedded in the signal is usually very reliable. A controller 121 therefore checks the reception level of the actually used broadcasting station, and tunes, if necessary, the receiver to another radio station. It further adapts the bandwidth of the selected frequency to the bandwidth to be expected for the transmission of a time signal and the respective frequency. The time information received from the demodulator 121 is forwarded by the controller 121 with the connecting means 123 of the charging device. In a particular embodiment of the present invention, the controller modulates the time information on a radio frequency (RF) signal which is then superimposed to the charging current and thus transmitted over the charging line to the mobile device 101.

In an alternative embodiment of the present invention the time information transmitted over external lines of the connecting means either serially or in parallel. Transmitting time information over external lines different from the lines used for feeding the charging current to the mobile device has the advantage, that the transmission is less sensitive to interferences induced by variations of the charging current.

To combine the advantages of transmitting the time information not impaired by any fluctuations of the charging current with the advantage of reducing the amount of transmission lines and contacts which is achieved by using the lines for feeding the charging current to the mobile device, the charging of the battery of the mobile device is suspended during transmission of the time information. This does not have to be done at regular intervals, because usually the mobile device is not used during a recharging of its battery, but can be e.g. accomplished when a certain value of the charging voltage is reached.

The transmission of data can be realised by modulating the current or the voltage of an electrical signal applied to one of the contacts. The receiving side then measures a variation in a modulated current or voltage for receiving the information. One side, for example a charging device, modulates the current for transmitting the time information to the mobile device, while on the side of the mobile device the fluctuations in the current are measured to retrieve the time information. A mobile device intending to send data to the charging device then e.g. modulates the voltage of the electrical signal and the respective variations in the voltage will then be measured at the charging device for obtaining a respective information. It has to be noted that this example is not meant to set any restrictions in the design of the communication channel between the charging device and the mobile device, but that any other known method of transmitting data between a data source and a data drain can be employed. In particular, the current modulation may be used in the mobile device while the voltage modulation will then be used in the charging device.

For receiving a time signal at an acceptable reception level, the receiver of the charging device is equipped with a suitable antenna 130 for the reception of long wave and short wave signals. Preferably the antenna for the long wave band is a magnetic antenna which allows a compact construction. Alternatively to an extra antenna, some internal lines of the charging device can be used as antenna or antennae. Especially for the long wave range the power cord 131 may be used for this purpose, because when it is plugged in it forms an effective antenna together with the power cables extending through the building. The radio frequency signals can then be separated from the power cord with suitable narrow band filters. For the short wave range, preferably internal lines for charging the lines will be used especially those lines that extend from the connecting means of the charging device to the connecting means of the mobile device. Like for the power cord antenna described above, the radio frequency signal will then be isolated from the lines with suited filters.

The mobile device 101 according to the present invention comprises connecting means 114, which in their construction correspond to the connecting means provided by the charging device. The mobile device further comprises receiving means 113 for receiving the time signal transmitted from the charging device, an adjusting means 112 for adjusting the real time clock 111 of the mobile device according to the time information received from the charging device and a controller 110 for controlling the overall functions of the mobile device.

The receiving means 113 demodulates if necessary the time information from the radio frequency signal obtained from the charging device. The information is then forwarded to the adjusting means 112 or, according to a special embodiment of the present invention, to an error detection and error compensation like described above for the demodulator 121 of the charging device 102. The integrity of the time information is verified, the adjusting means compares the actual time information with the value of the real time clock and if necessary readjusts the real time clock.

In another embodiment of the present invention, only the receiver 120 with the respective antenna or antennae 130 or 131 and/or 132 is integrated in the charging device while the functions of the demodulator 121 and the functions of the controller 122 concerning the reception and preparation of the time signal are taken over by a controller 110 of the mobile device. In this case, the receiver 120 receives the time signal on a frequency controlled by the controller 110 of the mobile device and provides at its output a time signal demodulated to the base band which uses the controller 110 for estimating the receive level and for retrieving the time information. When the receive level is below an acceptable value, the controller will change the reception frequency of the receiver for a different reception channel. The time information extracted from the time signal will then be forwarded by the controller 110 to the adjusting means 112 of the mobile device, where it will be checked for possible errors. When an error is detected, the adjusting means will correct the error so that in the end a verified and reliable time information is given which is used by the adjusting means to readjust the real time clock 111 according to the method described above. Thus, integration of a radio time signal receiver into the charging device for a mobile device not only allows the design of compact and light-weighted mobile devices without having to renounce a time synchronisation with a radio time signal, but further has the advantage, that an adaptation to the appropriate standards of a broadcast radio time signal can easily be accomplished by just using a charging device specially adapted to the local situations. By this design, no further functions are necessary which take into account regional distinctive features of certain countries.

## Claims

1. A mobile device (101) comprising a clock means (111), a chargeable battery (115) and connecting (114) means for connecting said battery (115) to a charging device (102) **characterised by**
a receiving means (113) for receiving a time signal from said charging device when said connecting means is connected to said charging device,
an adjusting means (112) for adjusting said clock means (111) according to a time information derived from said time signal, and
wherein the mobile device is a mobile terminal of a wireless telecommunication system.

2. A mobile device (101) according to claim 1,
**characterised in**
**that** said adjusting means (112) is adapted to detect errors in said time information.

3. A mobile device (101) according to claim 2,
**characterised in**
**that** said adjusting means (112) is adapted to correct said detected errors in said time information.

4. A mobile device (101) according to one of the preceding claims,
**characterised by**
control means for controlling selected functions of said charging device by transmitting data to said charging device.

5. A mobile device (101) according to one of the preceding claims,
**characterised in**
**that** said connecting means (114) comprises one or more connecting elements exclusively reserved for receiving said time signal from and/or transmitting data to a connected charging device.

6. A mobile device (101) according to one of the preceding claims,
**characterised in**
**that** said time signal is received as a high frequency signal superimposed to a charging value.

7. A charging device (102) for charging a mobile device (101) for a wireless communication system comprising connection means (123) for connecting said charging device (102) to said mobile device (101), and charging means (124) for charging a battery (119) of said mobile device,
**characterised by**
a receiving means (120) for receiving a time signal transmitted by radio,
a retrieving means (121) for retrieving a time information from said received time signal transmitted by radio,
and
a control means (122) for controlling the transmission of said time information to said mobile device when connected to said connection means.

8. A charging device (102) according to claim 7,
**characterised in**
**that** said retrieving means (121) is adapted to detect errors in said time information.

9. A charging device (102) according to claim 8,
**characterised in**
**that** said retrieving means (121) is adapted to correct said detected errors in said time information.

10. A charging device (102) according to one of the claims 7 to 9,
**characterised in**
**that** said receiving means (120) comprises an antenna element (130).

11. A charging device (102) according to claim 10,
**characterised in**
**that** said antenna element (130) is formed by a connecting line and/or a power cord and/or a power cord connected to an electricity supply.

12. A charging device according to one of the claims 7 to 11,
**characterised in,**
**that** said connecting means comprise one or more connecting elements exclusively reserved for transmitting said time signal to and/or receiving data from a connected mobile device.

13. A charging device according to one of the claims 7 to 12,
**characterised in**
**that** said time signal is transmitted as a high frequency signal superimposed to a charging value.

14. A synchronization system (101, 102) comprising:
a charging device (102) according to claim 7; and
a mobile device (101) according to claim 1.

## Patentansprüche

1. Mobile Vorrichtung (101), umfassend Taktmittel (111), eine aufladbare Batterie (115) und Verbindungsmittel (114) zum Verbinden der Batterie (115) mit einer Ladevorrichtung (102), **gekennzeichnet durch**:
ein Empfangsmittel (113) zum Empfangen eines Zeitsignals von der Ladevorrichtung, wenn das Verbindungsmittel mit der Ladevorrichtung verbunden wird,
ein Anpassungsmittel (112) zum Anpassen des Taktmittels (111) gemäß einer Zeitinformation, die aus dem Zeitsignal abgeleitet wird, und
wobei die mobile Vorrichtung ein mobiles Endgerät eines drahtlosen Telekommunikationssystems ist.

2. Mobile Vorrichtung (101) nach Anspruch 1,
**dadurch gekennzeichnet, dass**
das Anpassungsmittel (112) so ausgelegt ist, dass es Fehler in der Zeitinformation erkennt.

3. Mobile Vorrichtung (101) nach Anspruch 2,
**dadurch gekennzeichnet, dass**
das Anpassungsmittel (112) so ausgelegt ist, das es die erkannten Fehler in der Zeitinformation korrigiert.

4. Mobile Vorrichtung (101) nach einem der vorhergehenden Ansprüche,
**gekennzeichnet durch**
Steuermittel zum Steuern von ausgewählten Funktionen der Ladevorrichtung **durch** Senden von Daten an die Ladevorrichtung.

5. Mobile Vorrichtung (101) nach einem der vorhergehenden Ansprüche,
**dadurch gekennzeichnet, dass**
das Verbindungsmittel (114) ein oder mehrere Verbindungselemente umfasst, die ausschließlich zum Empfangen des Zeitsignals von einer angeschlossenen Ladevorrichtung und/oder Senden von Daten daran reserviert sind.

6. Mobile Vorrichtung (101) nach einem der vorhergehenden Ansprüche,
**dadurch gekennzeichnet, dass**
das Zeitsignal als ein Hochfrequenzsignal empfangen wird, das einen Ladewert überlagert.

7. Ladevorrichtung (102) zum Laden einer mobilen Vorrichtung (101) für ein drahtloses Kommunikationssystem, umfassend Verbindungsmittel (123) zum Verbinden der Ladevorrichtung (102) mit der mobilen Vorrichtung (101) und Lademittel (124) zum Aufladen einer Batterie (119) der mobilen Vorrichtung,
**gekennzeichnet durch**
ein Empfangsmittel (120) zum Empfangen eines Zeitsignals, das per Funk gesendet wird,
ein Abrufmittel (121) zum Abrufen einer Zeitinformation aus dem empfangenen Zeitsignal, das per Funk gesendet wird,
und
ein Steuermittel (122) zum Steuern der Übertragung der Zeitinformation an die mobile Vorrichtung, wenn mit dem Verbindungsmittel verbunden.

8. Ladevorrichtung (102) nach Anspruch 7,
**dadurch gekennzeichnet, dass**
das Abrufmittel (121) so ausgelegt ist, dass es Fehler in der Zeitinformation erkennt.

9. Ladevorrichtung (102) nach Anspruch 8,
**dadurch gekennzeichnet, dass**
das Abrufmittel (121) so ausgelegt ist, das es die erkannten Fehler in der Zeitinformation korrigiert.

10. Ladevorrichtung (102) nach einem der Ansprüche 7 bis 9,
**dadurch gekennzeichnet, dass**
das Empfangsmittel (120) ein Antennenelement (130) umfasst.

11. Ladevorrichtung (102) nach Anspruch 10,
**dadurch gekennzeichnet, dass**
das Antennenelement (130) durch eine Verbindungsleitung und/oder ein Leistungskabel und/oder ein Leistungskabel ausgebildet ist, das an eine Stromversorgung angeschlossen ist.

12. Ladevorrichtung nach einem der Ansprüche 7 bis 11, **dadurch gekennzeichnet, dass**
die Verbindungsmittel ein oder mehrere Verbindungselemente umfasst, die ausschließlich zum Senden des Zeitsignals an eine angeschlossene mobile Vorrichtung und/oder Empfangen von Daten davon reserviert sind.

13. Ladevorrichtung nach einem der Ansprüche 7 bis 12, **dadurch gekennzeichnet, dass**
das Zeitsignal als ein Hochfrequenzsignal gesendet wird, das einen Ladewert überlagert.

14. Synchronisationssystem (101, 102), umfassend:
eine Ladevorrichtung (102) nach Anspruch 7; und
eine mobile Vorrichtung (101) nach Anspruch 1.

## Revendications

1. Dispositif mobile (101) comprenant un moyen horloge (111), une pile chargeable (115) et un moyen de connexion (114) pour connecter ladite pile (115) à un dispositif de charge (102), **caractérisé par**
un moyen de réception (113) pour recevoir un signal horaire dudit dispositif de charge lorsque ledit moyen de connexion est connecté audit dispositif de charge,
un moyen de réglage (112) pour régler ledit moyen horloge (111) conformément à une information horaire tirée dudit signal horaire, et
ce dispositif mobile étant un terminal mobile d'un système de télécommunication sans fil.

2. Dispositif mobile (101) selon la revendication 1, **caractérisé en ce que**
ledit moyen de réglage (112) est adapté de façon à détecter des erreurs dans ladite information horaire.

3. Dispositif mobile (101) selon la revendication 2, **caractérisé en ce que**
ledit moyen de réglage (112) est adapté de façon à corriger lesdites erreurs détectées dans ladite information horaire.

4. Dispositif mobile (101) selon l'une quelconque des revendications précédentes,
**caractérisé par**
un moyen de commande pour commander des fonctions sélectionnées dudit dispositif de charge en transmettant des données audit dispositif de charge.

5. Dispositif mobile (101) selon l'une des revendications précédentes,
**caractérisé en ce que**
ledit moyen de connexion (114) comprend un ou plusieurs éléments de connexion réservés exclusivement pour recevoir ledit signal horaire d'un dispositif de charge connecté et/ou pour transmettre des données à celui-ci.

6. Dispositif mobile (101) selon l'une des revendications précédentes,
**caractérisé en ce que**
ledit signal horaire est reçu comme un signal à haute fréquence superposé à une valeur de charge.

7. Dispositif de charge (102) pour charger un dispositif mobile (101) pour un système de communication sans fil comprenant un moyen de connexion (123) pour connecter ledit dispositif de charge (102) audit dispositif mobile (101), et un moyen de charge (124) pour charger une pile (119) dudit dispositif mobile,
**caractérisé par**
un moyen de réception (120) pour recevoir un signal horaire transmis par radio,
un moyen d'extraction (121) pour extraire une information horaire dudit signal horaire reçu transmis par radio,
et
un moyen de commande (122) pour commander la transmission de ladite information horaire audit dispositif mobile lorsqu'il est connecté audit moyen de commande.

8. Dispositif de charge (102) selon la revendication 7,
**caractérisé en ce que**
ledit moyen d'extraction (121) est adapté de façon à détecter des erreurs dans ladite information horaire.

9. Dispositif de charge (102) selon la revendication 8,
**caractérisé en ce que**
ledit moyen d'extraction (121) est adapté de façon à corriger lesdites erreurs détectées dans ladite information horaire.

10. Dispositif de charge (102) selon l'une des revendications 7 à 9,
**caractérisé en ce que**
ledit moyen de réception (120) comprend un élément antenne (130).

11. Dispositif de charge (102) selon la revendication 10,
**caractérisé en ce que**
ledit élément antenne (130) est formé par une ligne de connexion et/ou un cordon d'alimentation et/ou un cordon d'alimentation connecté à une alimentation électrique.

12. Dispositif de charge selon l'une des revendications 7 à 11,
**caractérisé en ce que**
ledit moyen de connexion comprend un ou plusieurs éléments de connexion réservés exclusivement pour transmettre ledit signal horaire à un dispositif mobile connecté et/ou pour recevoir des données de celui-ci.

13. Dispositif de charge selon l'une des revendications 7 à 12,
**caractérisé en ce que**
ledit signal horaire est transmis comme un signal à haute fréquence superposé à une valeur de charge.

14. Système de synchronisation (101, 102) comprenant :
un dispositif de charge (102) selon la revendication 7 ; et
un dispositif mobile (101) selon la revendication 1.
